# EUROPÄISCHE PATENTSCHRIFT

(11) **EP 1 282 112 B1**
(45) Veröffentlichungstag und Bekanntmachung des Hinweises auf die Patenterteilung: **14.02.2007**
(21) Anmeldenummer: 02102089.6
(22) Anmeldetag: 02.08.2002
(51) Int. Cl.: G10L 15/26, G10L 15/22

(54) **Verfahren zur Unterstützung des Korrekturlesens eines spracherkannten Textes mit an die Erkennungszuverlässigkeit angepasstem Wiedergabegeschwindigkeitsverlauf**
Method of supporting proofreading of a recognized text in a speech to text system with playback speed adapted to confidence of recognition
Méthode d'aide à la correction d'un texte reconnu à partir d'un signal de parole avec vitesse de reproduction adaptée au degré de fiabilité de la reconnaissance

(30) Priorität: 04.08.2001 DE 10138408
(43) Veröffentlichungstag der Anmeldung: 05.02.2003
(73) Patentinhaber: Philips Intellectual Property & Standards GmbH, 20099 Hamburg (DE); Koninklijke Philips Electronics N.V., 5621 BA Eindhoven (NL)
(72) Erfinder: Kellner, Andreas, Postfach 50 04 42 52088, Aachen (DE)
(74) Vertreter: Volmer, Georg

(56) Entgegenhaltungen:
- EP-A- 0 924 687
- EP-A- 0 957 470
- WO-A-01/31634
- "IMPROVED CORRECTION OF STENOGRAPHERS' ERRORS THROUGH AUDIO PLAYBACK" IBM TECHNICAL DISCLOSURE BULLETIN, IBM CORP. NEW YORK, US, Bd. 36, Nr. 6A, 1. Juni 1993 (1993-06-01), Seiten 293-295, XP000372436 ISSN: 0018-8689
- ANONYMOUS: "Audio Highlighting Tool for Proofreading Dictated Text" RESEARCH DISCLOSURE, Bd. 42, Nr. 418, 1. Februar 1999 (1999-02-01), XP002262763 Havant, UK, article No. 41867

## Beschreibung

Die Erfindung bezieht sich im allgemeinen auf das Gebiet der Spracherkennung und im besonderen auf das Gebiet des Korrekturlesens von spracherkannten Texten. Seit einigen Jahren werden kommerziell verschiedene Spracherkennungssysteme angeboten, die es einem Benutzer erlauben, einen Text akustisch zu diktieren, um diesen dann vom Spracherkennungssystem automatisch in schriftlichen Text überführen zu lassen. Allerdings machen solche Spracherkennungssysteme in der Praxis Erkennungsfehler, so dass die automatisch erzeugten Texte i. d. R. fehlerbehaftet sind. Daher bieten einige dieser Systeme, so z. B. das Produkt FreeSpeech der Firma Philips, in ihrem Lieferumfang auch einen Korrektureditor an, der es erlaubt, die Spracherkennungsfehler manuell zu korrigieren.

Zur Unterstützung des manuellen Korrekturprozesses ist es bei FreeSpeech möglich, gleichzeitig den erkannten Text zu sehen und zu verändern und das ursprüngliche Diktat zu hören. Dabei werden bei der Wiedergabe jeweils die Textstellen markiert, die das Spracherkennungssystem der gerade abgespielten Stelle des Diktats während des Spracherkennungsprozesses zugeordnet hat. Durch Betätigen entsprechender Bedienelemente kann der Benutzer, der den Text Korrektur lesen will, die akustische Wiedergabe des Diktates anhalten und wieder fortsetzen. Der Fortsetzungspunkt kann dabei durch Vor- und Zurückspulen, aber auch durch Positionieren des Textcursors im erkannten Text gewählt werden, wobei letzteres wieder den im Spracherkennungsprozess festgestellten Zusammenhang zwischen Text und Akustik benutzt. Des Weiteren kann der Benutzer auch die Wiedergabegeschwindigkeit des Diktates manuell entsprechend seinen Bedürfnissen einstellen.

Aus WO 01/31634 A1 ist ebenfalls ein solches System und Verfahren zum Korrekturlesen bekannt, bei dem die Wiedergabegeschwindigkeit vom Benutzer mittels eines Sprachkommandos, taktiler Steuerungen (z.B. einen Computer-Joystick mit zusätzlichen Schaltern), Augenbewegung oder Augenzwinkern, Fußpedale, Muskelzuckungen oder sonstige bionische Eingabesignale erhöht oder erniedrigt werden kann.

In den letzten Jahren wurden viele Spracherkennungssysteme zusätzlich zu ihrer reinen Spracherkennungsfunktion mit der Möglichkeit zur Berechnung von Zuverlässigkeitsmaßen ausgestattet. Diese Maße machen eine quantitative Aussage dazu, inwieweit dem Erkennungsergebnis zu vertrauen ist. Idealerweise stellen sie die Wahrscheinlichkeit dar, Teile des Erkennungsergebnisees zuverlässiger und welche unzuverlässiger sind. Je nach Ausgestaltung werden solche Maße auf unterschiedlichen Ebenen berechnet. So berechnen manche Systeme ein Zuverlässigkeitsmaß für jeden Satz, jedes Wort, jede Silbe oder auch für größere oder kleinere Textbestandteile, die sich teilweise nur aus der speziellen inneren Struktur des Systems (z B. Hidden-Markov-Modelle als Subworteinheiten) ergeben.

In der US 6,006,183 wird nun ein Spracherkennungssystem (speech recognition system) offenbart, dessen Korrektureditor (user interface for displaying said text) das Zuverlässigkeitsmaß eines Wortes durch die Wahl einer entsprechenden Darstellungseigenschaft (display property) wiedergibt. Als Darstellungseigenschaften werden dabei u. a. Schriftart (font type), Schriftgröße (point size), Hervorhebungen und Effekte (bold, italics, ..., flashing, ...), Grautöne (shade of gray, gray scale map) sowie Farben (shade of a single color, color map) vorgeschlagen.

Während manche dieser Darstellungseigenschaften wie z B. Farbschattierungen durchaus in der Lage sind, auch kontinuierlich verteilte Zuverlässigkeitsmaße zu repräsentieren, führt die US 6,006,183 aus, dass es vorteilhaft ist, die möglichen Werte der Zuverlässigkeitsmaße durch die Definition geeigneter Schwallwertvergleiche (boundaries of each sub-range) in wenige Unterbereiche (sub-ranges) zusammenzufassen. Insbesondere kann durch Vergleich mit einem einzigen Schwellwert (score threshold) auch nur zwischen zuverlässigen und unzuverlässigen Erkennungsergebnissen unterschieden werden. Dabei sieht die US 6,006,183 vor, dass ein Benutzer des Korrektureditors sich die Darstellungseigenschaften im einzelnen für sich konfigurieren kann.

Durch eine geeignete Wahl der Darstellungseigenschaften kann ein Benutzer sich also die Zuverlässigkeitsmaße des erkannten Textes in übersichtlicher Weise anzeigen lassen. Z. B. kann er zuverlässigen Text in der Standardschriftfarbe und unzuverlässigen Text in Rot anzeigen lassen. Je nach Wunsch sind natürlich auch feinere Abstufungen möglich. Durch diese Hervorhebung der unzuverlässigen Textbestandteile wird die Aufmerksamkeit des Benutzers für diese Textpassagen erhöht und es wird ihm dadurch erleichtert, die Erkennungsfehler, die sich in diesen Passagen häufen, zu erkennen. Insgesamt verkürzt sich damit durch diese maschinelle Unterstützung des manuellen Korrekturprozesses die für die Korrektur des Sprachergebnisses benötigte Zeit.

Aufgabe der Erfindung ist es, ein Verfahren und eine Vorrichtung zu schaffen, die den Prozess für die manuelle Korrektur eines durch Spracherkennung eines Sprachsignals erhaltenen Textes weiter unterstützen und die für die Korrektur benötigte Arbeitszeit weiter verkürzen.

Diese Aufgabe wird gelöst einerseits durch
- ein Verfahren zur Unterstützung des Korrekturlesens eines durch Spracherkennung eines Sprachsignals erhaltenen Textes, von dem mindestens ein Textbestandteil mit einem Zuverlässigkeitsmaß für die Korrektheit seiner Spracherkennung versehen ist, wobei das Verfahren beinhaltet, den Verlauf der Wiedergabegeschwindigkeit des zu dem Textbestandteil gehörigen Teils des Sprachsignals abhängig vom Zuverlässigkeitsmaß des Textbestandteils zu gestalten,
und andererseits durch
- eine Vorrichtung zur Unterstützung des Korrekturlesens eines durch Spracherkennung eines Sprachsignals erhaltenen Textes, von dem mindestens ein Textbestandteil mit einem Zuverlässigkeitsmaß für die Korrektheit seiner Spracherkennung versehen ist, wobei die Vorrichtung dazu vorgesehen ist, den Verlauf der Wiedergabegeschwindigkeit des zu dem Textbestandteil gehörigen Teils des Sprachsignals abhängig vom Zuverlässigkeitsmaß des Textbestandteils zu gestalten.

Die Erfindung sieht also vor, für die als zuverlässig erkannten Passagen des Sprachsignals eine höhere Wiedergabegeschwindigkeit zu verwenden als für die als unzulässig erkannten. Dagegen musste bisher das gesamte Sprachsignal mit der niedrigeren Geschwindigkeit wiedergegeben werden, um dem Benutzer ausreichend Zeit für das Erkennen der Fehler zu geben. Dadurch verkürzt sich die für das Korrekturlesen benötigte Arbeitszeit. Dies gilt insbesondere dann, wenn die zuverlässigen Passagen im Sprachsignal überwiegen, was auf Grund der in typischen Diktatanwendungen niedrigen Fehlerraten heutiger Spracherkennungssysteme normalerweise der Fall ist. Weiter wird durch die Erniedrigung der Wiedergabegeschwindigkeit der unzuverlässigen Passagen die Aufmerksamkeit des Korrektur lesenden Benutzers für diese Passagen erhöht und ihm mehr Zeit zur Erkennung der sich in diesen Passagen häufenden Erkennungsfehler gegeben. Dadurch wird der Prozess des Korrekturlesens unterstützt.

Die abhängigen Ansprüche 2 bis 6 beanspruchen vorteilhafte Ausführungsbeispiele der Erfindung, die sich auch miteinander verbinden lassen.

In einer einfachen Ausgestaltung kann die Erfindung z.B. in der Weise ausgeführt werden, dass der zu einem Bestandteil des erkannten Textes, also der zu einem Wort, einem Satz, einer Silbe oder auch zu einer anderen Einheit gehörende Teil des Sprachsignals mit einer konstanten Geschwindigkeit wiedergegeben wird, die vom Zuverlässigkeitsmaß des Bestandteils abhängt. Die sprunghafte Änderung der Wiedergabegeschwindigkeit wischen zeitlich benachbarten Teilen des Sprachsignals unterschiedlicher Zuverlässigkeit kann dann jedoch zu einer Irritation eines Benutzers des Verfahrens führen. Daher wird in Anspruch 2 beansprucht, eine Angleichung der Wiedergabegeschwindigkeiten zeitlich benachbarter Teile des Sprachsignals durchzuführen. Insgesamt ergibt sich dadurch ein glatter zeitlicher Verlauf der Wiedergabegeschwindigkeit des Sprachsignals ohne steile oder gar sprunghafte Flanken, der es dem Benutzer gestattet, dem Sprachsignal ohne Irritationen zu folgen.

Eine solche Angleichung des Verlaufs der Wiedergabegeschwindigkeit zeitlich benachbarter Teile des Sprachsignals kann z. B. auch dazu führen, dass gewisse Änderungen der Wiedergabegeschwindigkeit unterdrückt werden. So kann man beispielsweise die Situation betrachten, dass eine relativ kurze zuverlässige Passage zeitlich zwischen zwei unzuverlässigen Passagen des Sprachsignals liegt. Um den Korrektur lesenden Benutzer nicht zu verwirren, kann es in einer solchen Situation sinnvoll sein, alle drei Passagen mit einer einheitlichen, dem Zuverlässigkeitsmaß der unzuverlässigen Textbestandteile entsprechenden Geschwindigkeit abzuspielen.

Bekanntermaßen modifiziert eine reine Änderung der Wiedergabegeschwindigkeit eines Signals die Stimmlage, d h den Grundfrequenzverlauf, des Signals Schnelleres Abspielen erzeugt eine Mickey-Maus-Stimme, langsameres eine Brummstimme. Eine solche Verschiebung der Stimmlage wirkt auf einen Benutzer unnötig ablenkend. Daher wird in Anspruch 3 die Erfindung vorteilhafterweise dahingehend ausgestaltet, dass die Veränderung der Wiedergabegeschwindigkeit in einer Weise erfolgt, welche die Stimmlage des Sprachsignals unbeeinflusst lässt. Methoden für derartige Geschwindigkeitsänderungen sind dem Fachmann z B. aus der literatur bekannt.

Grundsätzlich kann die Wahl der Wiedergabegeschwindigkeit des Sprachsignals in stetiger Weise vom Wert des Zuverlässigkeitsmaßes des zugehörigen Bestandteils des erkannten Textes abhängig gemacht werden. Für einen Benutzer des Verfahrens kann es jedoch übersichtlicher sein, wenn er nur mit einigen wenigen Wiedergabegeschwindigkeiten konfrontiert wird. Dann ist es für ihn einfacher, zwischen den zuverlässigen und unzuverlässigen Teilen des Spracherkennungsergebnisses zu unterscheiden. Dies lässt sich gemäß Anspruch 4 dadurch erreichen, dass der Gesamtbereich aller möglichen Werte des Zuverlässigkeitsmaßes in einzelne Teilbereiche eingeteilt wird, also z B. ein möglicher Gesamtbereich von 0 bis 100 (Prozent Zuverlässigkeit) in die 10 Teilbereiche 0 bis 10,10 bis 20 u. s. w. bis 90 bis 100, und der Verlauf der Wiederbegabegeschwindigkeit dann in Abhängigkeit von dem Teilbereich gewählt wird, zu dem der Wert des Zuverlässigkeitsmaßes des zugehörigen Bestandteils des erkannten Textes gehört.

Gemäß Anspruch 5 kann das Zuverlässigkeitsmaß eines Bestandteils auch auf akustische und/oder visuelle Art und Weise gekennzeichnet werden. Z. B. können unzuverlässige Passagen lauter, mit veränderter Stimmlage und/oder mit verstärkter Betonung abgespielt werden. Darüber hinaus können sie auch farblich z B. in Rot markiert werden.

Anspruch 6 sieht vor, dass ein Benutzer des Verfahrens die Möglichkeit hat, sich die Art und Weise der Wiedergabe nach seinen eigenen Wünschen und Bedürfnissen zu konfigurieren. Damit kann er u. a. Wiedergabegeschwindigkeitsverläufe, Lautstärken und farbliche Kennzeichnungen nach seinem eigenen Geschmack einstellen. Für die visuelle Kennzeichnung der Zuverlässigkeitsmaße und die Konfigurationsoptionen eines Benutzers kommen insbesondere alle in der US 6,006,183 offenbarten Möglichkeiten in Betracht, weshalb die US 6,006,183 hiermit diesbezüglich in diese Anmeldung mit einbezogen wird.

Die Erfindung bezieht sich in Anspruch 8 jedoch auch auf ein Spracherkennungssystem, das als eine Komponente über eine erfindungsgemäße Vorrichtung zur Unterstützung des Korrekturlesens eines durch Spracherkennung eines Sprachsignals erhaltenen Textes verfügt. Die Integration der Vorrichtung zur Unterstützung des Konekturlesens eines durch kennung eines Sprachsignals erhaltenen Textes in ein Spracherkennungssystem bringt einem Benutzer den Vorteil, dass er ein komplettes Diktiersystem aus einem Guss erhält. Dadurch werden mögliche Schnittstellenprobleme zwischen einem durch Spracherkennung eines Sprachsignals erhaltenen Textes und den zugehörigen Zuverlässigkeitsmaßen einerseits und einer erfindungsgemäßen Vorrichtung zur Unterstützung des Korrekturlesens des Textes andererseits vermieden,

Bei weiteren Ausführungsformen der Erfindung wurde der Korrektur zu lesende Text nicht notwendigerweise durch Spracherkennung erhalten, sondern durch Überführung in die Schriftform aus einem Sprachsignal. So kann die Erfindung z. B. auch zur Unterstützung des Korrekturlesens von Texten eingesetzt werden, die manuell erstellt wurden oder die durch manuelle Korrektur eines spracherkannten Textes gewonnen wurden. Ist die Zuordnung zwischen den Bestandteilen des Textes und den zugehörigen Teilen des Sprachsignals bekannt und kann man Zuverlässigkeitsmaße für die Textbestandteile angeben, so lässt sich der Verlauf der Wiedergabegeschwindigkeit des Textes beim Korrekturlesen gemäß dem erfinderischen Gedanken gestalten.

Solche Zuverlässigkeitsmaße können sich z. B. aus Fehlerstatistiken desjenigen ergeben, der den Text geschrieben hat. So kann man z. B. Statistiken früherer Korrekturen des Schreibers erstellen, um beispielsweise zu quantifizieren, welche Worte der Schreiber häufiger falsch schreibt. Manche Schreiber neigen z. B. dazu, Endungsfehler bei grammatischen Beugungen zu machen. Oder man kann die Zahl der Buchstaben eines Bestandteils mit der Dauer des zugehörigen Teils des Sprachsignals vergleichen, um bei starker Abweichung ihres Verhältnisses von dem im Diktat erhaltenen Durchschnitt auf Auslassungen bzw. Einfügungen von Bestandteilen zu schließen.

Bei einer Ausgestaltung der Erfindung,bei der der Text durch Überführung in die Schriftform aus einem Sprachsignal erhalten wird, wird die Zuordnung zwischen den Bestandteilen des Textes und den zugehörigen Teilen des Sprachsignals durch eine Zeitanpassung des Textes an das Sprachsignal bestimmt. Eine solche Zeitanpassung (time alignment) kann z. B. mit den Methoden der dynamischen Programmierung (dynamic time warping) und insbesondere mit Hilfe des Viterbi Algorithmus (Viterbi alignment) durchgeführt werden. Die jeweiligen Zuverlässigkeitsmaße der Bestandteile lassen sich entweder wieder wie oben dargelegt z. B. durch Korrekturstatistiken bestimmen oder man kann zu ihrer Bestimmung auch wieder Methoden der Spracherkennung einsetzen. Bekannt sind hier u. a. der Einschluss von Hintergrundmodellen (garbage models) oder von konkurrierenden Erkennungsalternativen in die Spracherkennung des Sprachsignals.

Diese und weitere Aspekte und Vorteile der Erfindung werden im Folgenden an Hand der Ausführungsbeispiele und insbesondere an Hand der beigefügten Zeichnungen näher erläutert. Es zeigen:
- Fig. 1: ein Sprachsignal mit seinen Bestandteilen, ihren Zuvelässigkeitsmaßen und einer Darstellung des Verlaufs der Wiedergabegeschwindigkeit,
- Fig. 2: eine Darstellung einer weiteren Möglichkeit zur Gestaltung des Verlaufs der Wiedergabegeschwindigkeit, und
- Fig. 3: eine Ausführungform einer erfindungsgemäßen Vorrichtung zur Unterstützung des Korrekturlesens eines Textes.

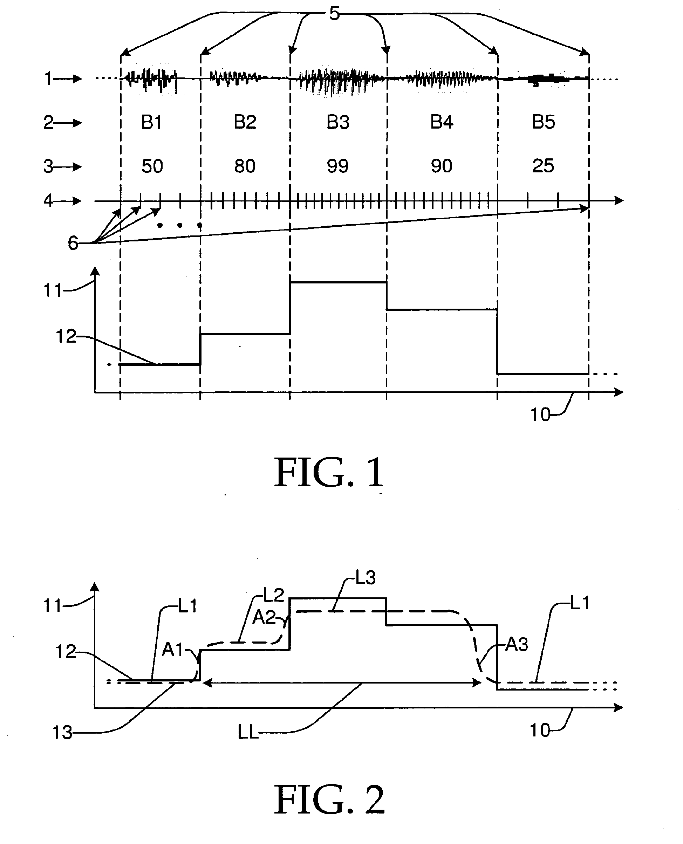

Die Fig 1 zeigt ein Sprachsignal mit seinen Bestandteilen, ihren Zuverlässigkeitsmaßen und einer Darstellung des Verlaufs der Wiedergabegeschwindigkeit. In Zeile 1 der Fig. 1 ist zunächst ein Sprachsignal dargestellt, wobei nach rechts die Zeit fortschreitet, während nach oben ein physikalischer Parameter des Sprachsignals wie z B. der Schalldruck am aufnehmenden Mikrofon aufgetragen ist. In dieser Darstellung ist dabei bereits eine erfinderische unterschiedliche Gestaltung des Verlaufs der Wiedergabegeschwindigkeit beim Korrekturlesen berücksichtigt. D. h, in Zeitbereichen, in denen das Sprachsignal langsam wiedergegeben wird, ist das Sprachsignal entsprechend gedehnt dargestellt, in Bereichen, in denen es schnell wiedergegeben wind, ist es entsprechend gestaucht dargestellt.

Die Bestandteile des zum Sprachsignal gehörigen Textes sind in Zeile 2 der Fig. 1 angegebenen und mit B1 bis B5 bezeichnet. Bei diesen Bestandteilen kann es sich um Worte, Silben, Laute, im Zusammenhang gesprochene Phrasen oder auch um andere Einheiten handeln. Die Zugehörigkeit eines Bestandteils B1 bis B5 in Zeile 2 zu seinem jeweiligen Teil des Sprachsignals in Zeile 1 ist dadurch kenntlich gemacht, dass der Bestandteil B1 bis B5 mittig unter seinem zugehörigen Teil des Sprachsignals steht. Die zeitlichen Grenzen zwischen den Bestandteilen sind in Fig 1 durch die vertikalen Linien 5 angedeutet.

In Zeile 3 von Fig. 1 finden sich die jeweiligen Zuverlässigkeitsmaße der Bestandteile B1 bis B5. Zur Illustration wurden konkrete Zahlenwerte 50, 80, 99, 90 und 25 auf einer Skala von 0 bis 100 (Prozent Zuverlässigkeit) gewählt, wobei größere Zahlen höhere Zuverlässigkeiten bedeuten. In Zeile 4 ist eine Zeitachse mit nach rechts wachsender Zeit gezeichnet. Diese Zeitachse ist durch die vertikalen Markierungen 6 unterteilt, deren unterschiedliche Abstände eine entsprechende Dehnung bzw. Stauchung einer gleichmäßig unterteilten Zeitachse und damit die unterschiedlichen Wiedergabegeschwindigkeiten des Sprachsignals beim Korrekturlesen andeuten.

Der beim Korrekturlesen des Sprachsignals verwendete Verlauf der Wiedergabegeschwindigkeit ist zur weiteren Erläuterung auch nochmals in einer x-y-Darstellung im unteren Teil der Fig. 1 dargestellt. Die Rechtsachse 10 entspricht wiederum der Zeitachse in denselben (gedehnten bzw. gestauchten) Maßstäben wie in den übrigen Teilen der Fig 1, die Hochachse 11 gibt die Höhe der Wiedergabegeschwindigkeit in nicht näher bezeichneten Einheiten an. Der zeitliche Verlauf der Wiedergabegeschwindigkeit selbst ist dann durch den Linienzug 12 angegeben. Die gepunkteten Linien am linken und rechten Rand von Zeile 1 und vom Linienzug 12 deuten an, dass das in Fig. 1 dargestellte Sprachsignal nur ein Ausschnitt aus einem umfassenderen Signal sein kann.

Bei der in Fig 1 erläuterten Ausführungsform des erfinderischen Verfahrens handelt es sich also um eine Variante, die für alle dargestellten Werte des Zuverlässigkeitsmaßes eine unterschiedliche Wiedergabegeschwindigkeit wählt, wobei die Geschwindigkeit mit der Größe des Zuverlässigkeitsmaßes wächst. Innerhalb eines Bereichs mit einheitlichem Zuverlässigkeitsmaß bleibt die Geschwindigkeit konstant, zwischen Bereichen unterschiedlicher Zuverlässigkeitmaße dagegen verändert sich die Geschwindigkeit sprunghaft.

Da wie bereits bemerkt, solche sprunghaften Änderungen der Wiedergabegeschwindigkeit den Korrektur lesenden Benutzer verwirren können, ist in Fig. 2 eine weitere Möglichkeit zur Gestaltung des Verlaufs der Wiedergabegeschwindigkeit gezeigt. Wieder ist der zeitliche Geschwindigkeitsverlauf in einem x-y-Diagramm mit Zeitachse 10 und Geschwindigkeitsachse 11 dargestellt. Zum besseren Vergleich mit der in Fig 1 gezeigten Ausführungsform der Erfindung ist in Fig. 2 auch nochmals der sich sprunghaft ändernde Geschwindigkeitsverlauf 12 aus Fig. 1 gezeigt. Alternativ zu diesem Verlauf 12 kann für das Sprachsignal aus Fig 1 in Fig. 2 auch der Geschwindigkeitsverlauf 13 gewählt werden.

Im Gegensatz zum Verlauf 12 hat der Verlauf 13 nur drei Geschwindigkeitsniveaus L1 bis L3. Die fünf Zuverläsigkeitswerte B1 bis B5 aus Fig. 1 werden also in drei Teilbereiche aller möglichen Zuverlässigkeitstwerte zusammengefasst und gemäß der Zugehörigkeit zu einem dieser Teilbereiche wird eines der drei Geschwindigkeitsniveaus L1 bis L3 für die Wiedergabegeschwindigkeit des entsprechenden Bestandteils B1 bis B5 gewählt. Konkret wurden in Fig. 2 die Teilbereiche 0 bis 60, 60 bis 85 und 85 bis 100 gewählt. Dadurch ergeben sich folgende Zuordnungen der Geschwindigkeitsniveaus L1 bis L3 zu den Zuverlässgkeitswerten der fünf Bestandteile B1 bis B5 aus Fig. 1: 25 für B5 und 50 für B1 zu Niveau L1, 80 für B2 zu Niveau L2 und 90 für B4 und 99 für B3 zu Niveau L3. Insbesondere wird für 25 für B5 und 50 für B1 dasselbe Geschwindigkeitsniveau L1 gewählt, was in Fig 2 durch die Zuordnungslinie LL angedeutet ist.

Weiter wurde bei der Gestaltung des Geschwindigkeitsverlaufs 13 eine Angleichung der Wiedergabegeschwindigkeiten zeitlich benachbarter Teile des Sprachsignals realisiert. Dazu wird die Wiedergabegeschwindigkeit eines Bestandteils B1 bis B5 nur in seinem inneren Bereich auf dem zugeordneten Geschwindigkeitsniveau L1 bis L3 gehalten, während an den Rändern die Wiedergabegsschwindigkeit derart verändert wird, dass sich ein glatter Übergang A1 bis A3 zwischen den Geschwindigkeitsniveaus im Inneren ergibt. Im einzelnen erhält man so von links nach rechts folgende Geschwindigkeitsangleichungen: A1 zwischen B1 und B2 von L1 nach L2, A2 zwischen B2 und B3 von L2 nach L3 und A3 zwischen B4 und B5 von L3 nach L1. Da die Zuverlässigkeiten 99 und 90 von B3 und B4 zu demselben Zuverlässigkeitsteilbereich gehören, ergibt sich zwischen B3 und B4 keine Geschwindigkeitsangleichung, sondern das zugeordnete Geschwindigkeitsniwau L3 wird auch im Grenzbereich aufrecht erhalten.

Für die zeitliche Lage der Geschwindigkeitsangleichungen A1 bis A3 sind in Fig 2 zwei Möglichkeiten dargestellt. Die beiden Angleichungen A1 und A2 sind symmetrisch um die jeweiligen zeitlichen Grenzen zwischen den Sptachsignalpassagen angeordnet. D. h z B. bei der Angleichung A1, dass die Wiedergabegeschwindigkeit bereits vor dem Ende der zu B1 gehörigen Passage vom Geachwindigkeitsniveau L1 an zu erhöhen begonnen wird und erst nach dem Beginn der zu B2 gehörigen Passage das dazu gehörige Geschwindigkeitaniveau L2 erreicht. Bei der Angleichung A3 dagegen wird die gesamte Angleichung bereits in der zum zuverlässigeren Bestandteil B4 gehörigen Passage vollzogen, so dass die zum unzuverlässigeren Bestandteil B5 gehörige Passage bereits vollständig auf dem langsameren Geschwindigkeitsniveau L1 abgespielt wird. Dies hat den Vorteil, dass die unzuverlässigere Passage in ihrer Gänze in der ihr entsprechenden niedrigeren Geschwindigkeit (oder einer noch niedrigeren, falls eine noch unzuverlässigere Passage benachbart ist) wiedergegeben und so dem Benutzer ausreichend Zeit zum Korrekturlesen gegeben wird.

Bei einer weiteren Angleichung der Verläufe der Wiedergabegeschwindigkeiten der Bestandteile B1 bis B5 könnte der Bestandteil B2 auch auf demselben Geschwindigkeitsniveau L1 wie der Bestandteil B1 abgespielt werden. Das Geschwindigkeitsniveau L2 würde dann in der Fig. 2 nicht mehr auftauchen. Dies hätte seinen Hintergrund darin, dass die Dauer der zum Bestandteil B2 gehörigen Passage des Sprachsignals relativ kurz ist. Der in Fig. 2 gezeigte kurzzeitige Wechsel der Wiedergabegeschwindigkeit auf das Geschwindigkeitsniveau L2 für den Bestandteil B2 könnte vom Korrektur lesenden Benutzer so vielleicht eher verwirrend empfunden werden. Daher könnte der Benutzer eine stärkere Angleichung der Geschwindigkeitsverläufe zeitlich benachbarter Passagen wählen, wodurch die Geschwindigkeitsangleichung A1 zwischen B1 und B2 von L1 auf L2 unterdrückt und die Geschwindigkeitsangleichung A2 zwischen B2 und B3 zu einem Übergang von L1 auf L3 modifiziert würde.

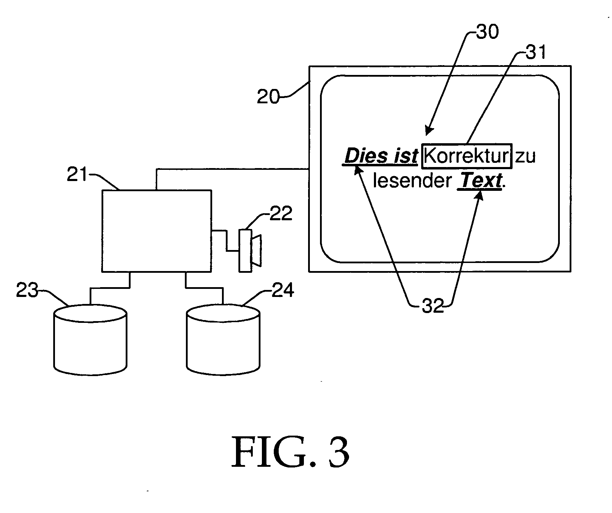

Fig. 3 zeigt eine Ausführungsform einer erfindungsgemäßen Vorrichtung zur Unterstützung des Korrekturlesens eines Textes Der Korrektur zu lesende Text wird in seiner Gänze oder auch nur in einem Ausschnitt um den gerade akustisch wiedergegebenen Teil auf dem Display 20 dargestellt. Beispielhaft ist in Fig. 3 der Text 30 mit dem Wortlaut "Dies ist Korrektur zu lesender Text." dargestellt. Es wird angenommen, dass gerade der Teil des Sprachsignals wiedergegeben wird, der zum Textbestandteil, hier einem Wort, "Korrektur" gehört. Diese Wiedergabestelle ist in dem auf dem Display 10 dargestellten Text 30 durch einen Rahmen 31 um den wiedergegebenen Bestandteil markiert.

Die beiden Textstellen 32, nämlich die Phrase "Dies ist" und das Wort "Text" sind durch eine besondere Schrirtgestaltung, nämlich schrägen Fettdruck mit Unterstreichung, hervorgehoben. Dazu wird in diesem Beispiel angenommen, dass nur zwei Zuverlässigkeitsteilbereiche, nämlich "zuverlässig" und "unzuverlässig" werden. Zuverlässige Passagen sind im Normaldruck, unzuverlässige in der beschriebenen Hervorhebung dargestellt. Von der Wiedergabegeschwindigkeit beginnt der Text also langsam mit dem unzuverlässigen Teil "Dies ist". Dann wird der zuverlässige Teil "Korrektur zu lesender" schnell abgespielt, und die Wiedergabe des Satzes endet mit dem langsam wiedergegebenen unzuverlässigen Teil "Text".

Gesteuert wird das Display 20 durch die Steuereinheit 21, die auch den Lautsprecher 22 steuert, über den das Sprachsignal abgespielt wird Die Steuereinheit 21 bezieht das Sprachsignal aus dem Sprachsignalspeicher 23 und den erkannten Text, die Zuordnunganformation seiner Bestandteile zu den zugehörigen Teilen des Sprachsignals und die Zuvedaseigkeitamaße der Bestandteile aus dem Textspeicher 24.

## Patentansprüche

1. Verfahren zur Unterstützung des Korrekturlesens eines durch Spracherkennung eines Sprachsignals (1) erhaltenen Textes (2, 30), von dem mindestens ein Textbestandteil (B1 bis B5) mit einem Zuverlässigkeitsmaß (3) für die Korrektheit seiner Spracherkennung versehen ist, wobei das Verfahren beinhaltet, den Verlauf der Wiedergabegeschwindigkeit (12,13) des zu dem Textbestandteil (B1 bis B5) gehörigen Teils des Sprachsignals (1) abhängig vom Zuverlässigkeitsmaß (3) des Textbestandteils (B1 bis B5) zu gestalten.

2. Verfahren nach Anspruch 1,
**dadurch gekennzeichnet,**
**dass** die Verläufe der Wiedergabegeschwindigkeit (13) zeitlich benachbarter Teile des Sprachsignals (1) aneinander angeglichen werden.

3. Verfahren nach Anspruch 1,
**dadurch gekennzeichnet,**
**dass** die Gestaltung des Verlaufs der Wiedergabegeschwindigkeit (12,13) des Teils des Sprachsignals (1) ohne Veränderung des Grundfrequenzverlaufs des Teils des Sprachsignals (1) erfolgt.

4. Verfahren nach Anspruch 1,
**dadurch gekennzeichnet,**
- **dass** der Wertebereich der Zuverlässigkeitsmaße (3) in Teilbereiche unterteilt wird,
- und **dass** der Verlauf der Wiedergabegeschwindigkeit (12,13) des zu dem Textbestandteil (B1 bis B5) gehörigen Teils des Sprachsignals (1) abhängig vom Teilbereich gestaltet wird, zu dem das Zuverlässigkeitsmaß (3) des Textbestandteils (B1 bis B5) gehört.

5. Verfahren nach Anspruch 1,
**dadurch gekennzeichnet,**
**dass** das Zuverlässigkeitsmaß (3) des Textbestandteils (B1 bis B5) akustisch und/oder visuell (32) **gekennzeichnet** wird.

6. Verfahren nach Anspruch 1,
**dadurch gekennzeichnet,**
**dass**
- die Abhängigkeit zwischen Verlauf der Wiedergabegeschwindigkeit (12,13) und Zuverlässigkeitsmaß (3) des Textbestandteils (B1 bis B5) und/oder
- der Grad der Angleichung (A1 bis A3) der Verläufe der Wiedergabegeschwindigkeit (13) zeitlich benachbarter Teile des Sprachsignals (1) und/oder
- die Teilbereiche der Zuverlässigkeitsmaße (3) und/oder
- die Art und Weise der akustischen und/oder visuellen Kennzeichnung (32) des Zuverlässigkeitsmaßes (3) des Textbestandteils (B1 bis B5)
durch einen Benutzer des Verfahrens konfigurierbar ist.

7. Vorrichtung zur Unterstützung des Korrekturlesens eines durch Spracherkennung eines Sprachsignals (1) erhaltenen Textes (2, 30), von dem mindestens ein Textbestandteil (B1 bis B5) mit einem Zuverlässigkeitsmaß (3) für die Korrektheit seiner Spracherkennung versehen ist, wobei die Vorrichtung dazu vorgesehen ist, den Verlauf der Wiedergabegeschwindigkeit (12, 13) des zu dem Textbestandteil (B1 bis B5) gehörigen Teils des Sprachsignals (1) abhängig vom Zuverlässigkeitsmaß (3) des Textbestandteils (B1 bis B5) zu gestalten.

8. Spracherkennungssystem mit Vorrichtung zur Unterstützung des Korrekturlesens eines durch Spracherkennung eines Sprachsignals (1) erhaltenen Textes(2, 30), von dem mindestens ein Textbestandteil (B1 bis B5) mit einem Zuverlässigkeitsmaß (3) für die Korrektheit seiner Spracherkennung versehen ist, wobei die Vorrichtung dazu vorgesehen ist, den Verlauf der Wiedergabegeschwindigkeit (12,13) des zu dem Textbestandteil (B1 bis B5) gehörigen Teils des Sprachsignals (1) abhängig vom Zuverlässigkeitsmaß (3) des Textbestandteils (B1 bis B5) zu gestalten.

## Claims

1. A method of supporting the proof-reading of a text (2, 30) obtained by speech recognition of a speech signal (1), of which at least one text component (B1 to B5) has a reliability level (3) for the correctness of its speech recognition, wherein the method comprises a control of the progression of the replay speed (12, 13) of the part of the speech signal (1) belonging to the text component (B1 to B5) as a function of the reliability level (3) of the text component (B 1 to B5).

2. A method as claimed in claim 1, **characterized in that** the progressions of the replay speeds (13) of temporally adjacent parts of the speech signal (1) are adjusted to each other.

3. A method as claimed in claim 1, **characterized in that** the progression of the replay speed (12, 13) of the part of the speech signal (1) is controlled without changing the gradient of the pitch of the part of the speech signal (1).

4. A method as claimed in claim 1, **characterized in that**
- the value range of the reliability levels (3) is divided into sub-ranges,
- and **in that** the progression of the replay speed (12, 13) of the part of the speech signal (1) belonging to the text component (B1 to B5) is controlled as a function of the sub-range to which the reliability level (3) of the text component (B1 to B5) is allocated.

5. A method as claimed in claim 1, **characterized in that** the reliability level (3) of the text component (B1 to B5) is marked acoustically and/or visually (32).

6. A method as claimed in claim 1, **characterized in that**
- the dependency between the progression of the replay speed (12, 13) and the reliability level (3) of the text component (B1 to B5) and/or
- the degree of adjustment (A1 to A3) of the progressions of the replay speeds (13) of temporally adjacent parts of the speech signal (1) and/or
- the sub-ranges of the reliability levels (3) and/or
- the method of acoustic and/or visual marking (32) of the reliability level (3) of the text component (B1 to B5),
can be configured by a user of the method.

7. A device for supporting the proof-reading of a text (2, 30) obtained by speech recognition of a speech signal (1), of which at least one text component (B1 to B5) has a reliability level (3) for the correctness of its speech recognition, wherein the device is designed to control the progression of the replay speed (12, 13) of the part of the speech signal (1) belonging to the text component (B1 to B5) as a function of the reliability level (3) of the text component (B1 to B5).

8. A speech recognition system with a device for supporting proof-reading of a text (2, 30) obtained by speech recognition of the speech signal (1), of which at least one text component (B1 to B5) has a reliability level (3) for the correctness of its speech recognition, wherein the device is designed to control the progression of the replay speed (12, 13) of the part of the speech signal (1) belonging to the text component (B1 to B5) as a function of the reliability level (3) of the text component (B1 to B5).

## Revendications

1. Méthode d'aide à la correction d'un texte obtenu (2, 30) à partir d'un signal de parole (1) dont un élément de texte au moins (B1 à B5) est doté d'un degré de fiabilité (3) pour la correction d'une reconnaissance de la parole auquel cas cette méthode permet de créer la vitesse de reproduction (12, 13) de la partie du signal de parole (1) appartenant à l'élément de texte (B1 à B5) en fonction du degré de fiabilité (3) de l'élément de texte (B1 à B5).

2. Méthode conformément à la revendication 1,
**caractérisée en ce que**
les écoulements de la vitesse de reproduction (13) sont adaptés à des parties du signal de parole (1) proches dans le temps.

3. Méthode conformément à la revendication 1,
**caractérisée en ce que**
la configuration de l'écoulement de la vitesse de reproduction (12, 13) de la partie du signal de parole (1) s'effectue sans modifier la réponse en fréquence fondamentale de la partie du signal de parole (1).

4. Méthode conformément à la revendication 1,
**caractérisée en ce que**
la gamme de valeurs des degrés de fiabilité (3) est divisée en plages temporelles et que l'écoulement de la vitesse de reproduction (12, 13) de la partie du signal de parole (1) appartenant à l'élément de texte (B1 à B5) est créé selon la plage temporelle à laquelle appartient le degré de fiabilité (3) de l'élément de texte (B1 à B5).

5. Méthode conformément à la revendication 1,
**caractérisée en ce que**
le degré de fiabilité (3) de l'élément de texte (B1 à B5) est **caractérisé** acoustiquement et/ou visuellement (32).

6. Méthode conformément à la revendication 1,
**caractérisée en ce que**
la dépendance entre l'écoulement de la vitesse de reproduction (12, 13) et le degré de fiabilité (3) de l'élément de texte (B1 à B5) et/ou
le degré d'adaptation (A1 à A3) des écoulements de la vitesse de reproduction (12, 13) de parties du signal de parole proches dans le temps (1) et/ou
les parties des degrés de fiabilité (3) et/ou
le type de codage acoustique et/ou visuel (32) du degré de fiabilité (3) de l'élément de texte (B1 à B5)
est configurable par l'utilisateur de la méthode.

7. Dispositif d'aide à la correction d'un texte obtenu (2, 30) à partir d'un signal de parole (1) dont un élément de texte au moins (B1 à B5) est doté d'un degré de fiabilité (3) pour la correction d'une reconnaissance de la parole auquel cas ce dispositif permet de créer la vitesse de reproduction (12, 13) de la partie du signal de parole (1) appartenant à l'élément de texte (B1 à B5) en fonction du degré de fiabilité (3) de l'élément de texte (B1 à B5).

8. Système de reconnaissance de la parole muni d'un dispositif d'aide à la correction d'un texte obtenu (2, 30) par reconnaissance d'un signal de parole (1) dont un élément de texte au moins (B1 à B5) est doté d'un degré de fiabilité (3) pour la correction d'une reconnaissance de la parole auquel cas ce dispositif permet de créer la vitesse de reproduction (12, 13) de la partie du signal de parole (1) appartenant à l'élément de texte (B1 à B5) en fonction du degré de fiabilité (3) de l'élément de texte (B1 à B5).
